# EUROPEAN PATENT APPLICATION

(11) **EP 0 630 156 A1**
(43) Date of publication of application: **21.12.1994**
(21) Application number: 94201722.9
(22) Date of filing: 15.06.1994
(51) Int. Cl.: H04N 7/087, H04N 1/00

(54) **Interactive television system**

(30) Priority: 16.06.1993 NL 9301048
(71) Applicant: NWT DATAWAVE B.V., NL-3045 AP Rotterdam (NL)
(72) Inventor: De Boer, Jan, NL-3742 CT Baarn (NL); Schmidt, Arthur O.F.J., NL-3223 EE Hellevoetsluis (NL)
(74) Representative: de Bruijn, Leendert C.

(57) **Abstract**

Interactive television system which by means of a keyboard (1c) can communicate via, for example, the local cable network (9) with a central computer (6), which supplies teletext pages to a user's television screen (8). To this end, the central computer (6) first selects a teletext page number, which is displayed to the user on a display unit (1a), after which the user can tune the television screen to the teletext page displayed before the central computer transmits the desired teletext page.

## Description

The invention relates to an interactive television system.

It is known to request teletext pages with the aid of a telephone handset and the telephone network. However, this has the disadvantage that it is not possible for a user to enter alphanumeric information using a standard telephone handset. Furthermore, the telephone network has the disadvantage that large scale communal use is not possible because of the limited availability of the number of telephone lines.

The object of the invention is to provide an installation and a method with which a user can request the teletext information he or she desires whilst many others, for example hundreds of others, can do the same at the same time.

To this end the invention provides an interactive television system at least comprising:
- a user station provided with a keyboard, a keyboard processor and a display unit;
- first input/output means connected on one side to the user station and on the other side to a network;
- a central computer at least provided with a memory loaded with several application programs;
- second input/output means connected on one side to the network and on the other side to the central computer;
- an inserter connected to the central computer and to the network and intended to supply preselected data originating from the memory to the network;
- a television screen for displaying the data originating from the memory.

By employing a keyboard at the user end, the user has more possibilities than before for supplying desired information to the network. Moreover, as a result of these measures a quasi-simultaneous return path for communication from the user station to the central computer can be achieved without the use of repeaters in the return path of the network.

The first input/output means are preferably connected to the user station via an infra-red interface.

In a preferred embodiment the network is also connected to other user stations via other respective first input/output means.

It is particularly advantageous to allow the communication between each of the user stations and the central computer via the network to proceed via time division multiplexing of data, whilst the network is preferably a cable network, a protocol computer being located between the second input/output means and the central computer to manage the connected user stations logged on at the same time. By employing these measures use can be made of the bus structure of the cable network, as a result of which a large number of users, for example hundreds at a time, can be concentrated on a narrow-band channel. Consequently, narrow-band amplifiers can be used at the connection points with the network, as a result of which noise can effectively be suppressed in a simple manner.

Preferably all first input/output means comprise a modem and a microprocessor-based control unit for communication with the respective user stations and for outputting data to, or receiving data from, the cable network via the modem and processing said data in time division multiplexing form.

The data displayed on the television screen can together form a Prestel page, which can be supplied to the cable network after coding by the inserter in scan lines of a television channel which are reserved for teletext.

The invention also relates to a method for transmission of data from the memory of the central computer to the television screen in the interactive television system defined above, comprising the following steps:
a) entry of a predetermined key combination by the user via the keyboard of the user station;
b) transmission of an identification code by the keyboard processor to the first input/output means;
c) transmission of a log-on message by the first input/output means to the central computer via the network and the second input/output means;
d) transmission of a teletext page number by the central computer to the relevant user station via the second input/output means, the network and the first input/output means;
e) display of the teletext page number on the display unit of the user station;
f) tuning of the television screen by the user to the teletext page number shown on the display unit;
g) entry of a predetermined code by the user via the keyboard;
h) transmission of said code to the central computer via the first input/output means, the network and the second input/output means;
i) transmission of data associated with said code from the memory by the central computer to the television screen via the inserter and the network on the said teletext page number.

The invention will be explained in more detail below with reference to a figure, which shows one embodiment of the invention.

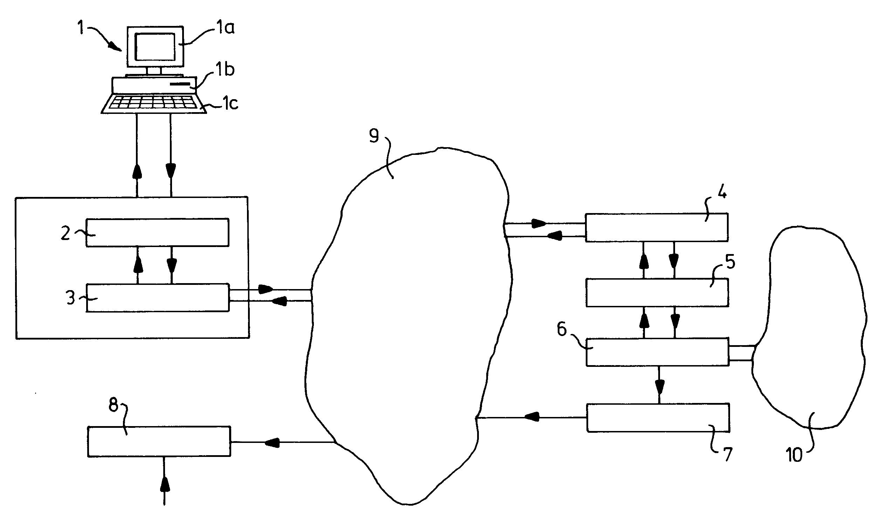

The figure shows a user station 1, provided with a keyboard 1c, a keyboard processor 1b and a display unit 1a. The user station 1 is connected to a network 9 via input/output means 2, 3. The input/output means 2, 3 preferably comprise a microprocessor-based control unit 2 and a modem 3. The connection between the input/output means 2, 3 and the user station 1 preferably comprises an infra-red interface. Other interfaces, known to those skilled in the art, are, however, possible. The network 9 is preferably a (local) cable network.

A central computer 6 is connected to the network 9 via input/output means 4 and a protocol computer 5. The central computer 6 has a memory 10 in which at least several application programs are stored. Other computers can optionally be linked to said central computer. An inserter 7 is connected to the central computer 6 and to the network 9. Finally, a television screen 8 is connected to the network 9. The user station 1, the input/out means 2 and 3 and the television screen 8 belong to one and the same user.

The figure shows the situation where only one user station 1 is connected to the network 9. In practice, several, for example hundreds of, user stations are connected to the network 9 at the same time and all of said user stations communicate with the same central computer 6. The figure also relates primarily to the situation where the network 9 is a (local) cable network.

The keyboard 1c is an alphanumeric keyboard. Each user station is provided with a unique identification code (a user number) and unique control logic to permit efficient handling of keyboard strokes for the purposes of videotex and other protocols. When a user logs on, by striking a predetermined key combination on the keyboard 1c, the user number is transmitted to the microprocessor-based control unit 2. The microprocessor-based control unit 2 is responsible for communication with the user station. The microprocessor-based control unit 2 is also responsible for communication with the network 9. Communication with the network 9 preferably proceeds via a time division multiplexing protocol. The microprocessor-based control unit 2 transmits the user number to the modem 3 in a reserved time slot. The modem 3 transmits the user number to the input/output means 4 via the network 9 within a very short time frame of, for example, less than 20 milliseconds. The input/output means 4, which preferably comprise a modem, receive the user number, as well as user numbers from other user stations which are logged on. The modem 4 thus passes on all incoming user numbers from all connected user stations to the protocol computer 5. The protocol computer 5 checks the user number and transmits this, together with any further messages, to the central computer 6. The central computer 6 provides each user with a teletext page number, which is transmitted together with an assigned time slot in the reverse direction to the relevant microprocessor-based control unit 2. A fixed time slot is thus made available to the microprocessor-based control unit 2 for operation of the modem 3. The teletext page number received in this way is displayed on the display unit 1a, so that the user knows on which teletext page the central computer 6 will supply the desired information.

This procedure is the same for all connected user stations 1, each microprocessor-based control unit 2 being assigned its own specific time slot by the central computer 6. Synchronisation for the transmission of log-on signals originating from the various microprocessor-based control units 2 over the network 9 to the modem 4 is established by the protocol computer 5, which supplies the network 9 with synchronisation pulses suitable for this purpose via the modem 4.

Keystrokes on the keyboard 1c at the user station 1 can, if necessary, be buffered by the keyboard processor 1b before they are transmitted to the microprocessor-based control unit 2. The microprocessor-based control unit 2 determines when the information stored in the buffer is transmitted to the modem 3 in the assigned time slot. The protocol computer 5 receives all keystrokes, both those which have been stored as a string in a buffer of the keyboard processor 1b and any individual keystrokes. The protocol computer 5 transmits said keystrokes, together with the User number associated with the specific time slot, to the central computer 6.

The keystrokes received by the central computer 6 are transmitted to the memory 10 and assigned to one of the application programs resident therein. By this means, predetermined information, associated with the particular keystrokes, is selected from the memory or requested via a network, for example in the form of Prestel pages (videotex services) or formatted as Prestel pages. The central computer 6 transmits the selected Prestel pages to the inserter 7 together with the above-mentioned teletext page number. The inserter 7 then transmits the Prestel pages on the selected teletext page and coded in the scan lines of a television channel which are reserved for teletext to the network 9. The television screen 8, which has been tuned by the user to the teletext page number assigned by the central computer 6, then displays the Prestel page.

During operation, the following sequence of steps is preferably carried out in order to display specific desired information stored in the memory 10 on the television screen 8:
a) a user of the user station 1 keys in a predetermined key combination on the keyboard 1c;
b) the keyboard processor 1b transmits a specific identification code associated with said user station to the microprocessor-based control unit 2, which transmits this information to the modem 3;
c) the microprocessor-based control unit 2 transmits a log-on message via the modem 3 over the network 9 to the central computer 6;
d) the central computer 6 transmits a specific teletext page number, for example made up of 7 digits, back to the user station 1 concerned via the modem 4, the network 9, the modem 3 and the microprocessor-based control unit 2;
e) the teletext page number selected by the central computer 6 is displayed on the display unit 1a of the user station 1;
f) the user tunes his or her television screen 8 to the teletext page number shown on the display unit 1a;
g) the user keys in a new predetermined code on the keyboard 1c;
h) the keyboard processor 1b transmits said code to the central computer 6 via the microprocessor-based control unit 2, the modem 3, the network 9 and the modem 4;
i) the central computer 6 transmits the data associated with said code from the memory 10 to the television screen 8 via the inserter 7 and the network 9 on the said teletext page number.

With the installation and procedure described above, the return route to the central computer 6 can be used quasi-simultaneously from any of the user stations 1 for return information originating from the various user stations 1 and addressed to the central computer 6. By use of the means described above it is possible to transmit return information from the various user stations via the network 9 without the use of repeaters between the central computer 6 and the modem 4.

By use of the above-mentioned means and the above-mentioned method it is possible to work with narrow-band signals, so that noise can easily be suppressed. To this end, sensitive amplifiers which have a narrow bandwidth and suppress high frequency noise are preferably used at the connection points with the network 9.

The figure shows the situation where a user station 1 is provided with a separate display unit 1a and the user has a separate television screen 8. If desired, it is also possible for the television screen 8 to be connected to the keyboard processor 1b and for a small area of the television screen 8 to be reserved for displaying the keystrokes on the keyboard 1c and for displaying the information sent back by the central computer 6, such as the teletext page number on which the information ultimately desired will be supplied by the central computer 6.

## Claims

1. Interactive television system, characterised in that said system at least comprises:
- a user station (1) provided with a keyboard (1c), a keyboard processor (1b) and a display unit (1a);
- first input/output means (2, 3) connected on one side to the user station (1) and on the other side to a network (9);
- a central computer (6) at least provided with a memory (10) loaded with several application programs;
- second input/output means (4) connected on one side to the network (9) and on the other side to the central computer (6);
- an inserter (7) connected to the central computer (6) and to the network (9) and intended to supply preselected data originating from the memory (10) to the network (9);
- a television screen (8) for displaying the data originating from the memory (10).

2. Interactive television system according to Claim 1, characterised in that the first input/output means (2, 3) are connected to the user station (1) via an infra-red interface.

3. Interactive television system according to Claim 1 or 2, characterised in that the network (9) is also connected to other user stations via other respective first input/output means.

4. Interactive television system according to Claim 1, 2 or 3, characterised in that communication between each of the user stations (1) and the central computer (6) via the network (9) proceeds via time division multiplexing of data.

5. Interactive television system according to one of the preceding claims, characterised in that the network (9) is a cable network and a protocol computer (5) is located between the second input/output means (4) and the central computer (6) for communication with connected user stations (1).

6. Interactive television system according to Claim 5, characterised in that all first input/output means (2, 3) comprise a modem (3) and a microprocessor-based control unit (2) for communication with the respective user stations (1) and for outputting data to, or receiving data from, the cable network (9) via the modem (3) and processing said data in time division multiplexing form.

7. Interactive television system according to either of Claims 5 and 6, characterised in that the data displayed on the television screen (8) together form a Prestel page, which is supplied to the cable network (9) after coding by the inserter (7) in scan lines of a television channel which are reserved for teletext.

8. Interactive television system according to one of the preceding claims, characterised in that the display unit (1a) is a reserved area of the television screen (8).

9. Interactive television system according to one of the preceding claims, characterised in that the central computer (6) is connected to other computers.

10. Method for transmission of data from the memory (10) of the central computer (6) to the television screen (8) in the interactive television system according to one of the preceding claims, characterised by the following steps:
a) entry of a predetermined key combination by the user via the keyboard (1c) of the user station (1);
b) transmission of an identification code by the keyboard processor (1b) to the first input/output means (2, 3);
c) transmission of a log-on message by the first input/output means (2, 3) to the central computer (6) via the network (9) and the second input/output means (4);
d) transmission of a teletext page number by the central computer (6) to the relevant user station (1) via the second input/output means (4), the network (9) and the first input/output means (2, 3);
e) display of the teletext page number on the display unit (1a) of the user station (1);
f) tuning of the television screen (8) by the user to the teletext page number shown on the display unit (1a);
g) entry of a predetermined code by the user via the keyboard (1c);
h) transmission of said code to the central computer (6) via the first input/output means (2, 3), the network (9) and the second input/output means (4);
i) transmission of data associated with said code from the memory (10) by the central computer (6) to the television screen (8) via the inserter (7) and the network (9) on the said teletext page number.
